(19) Europäisches Patentamt / European Patent Office / Office européen des brevets

(11) **EP 2 593 907 B1**

(12) **FASCICULE DE BREVET EUROPEEN**

(45) Date de publication et mention
de la délivrance du brevet:
**06.08.2014 Bulletin 2014/32**

(51) Int Cl.:
***G06K 9/00*** *(2006.01)*      ***G06K 9/32*** *(2006.01)*
***G06K 9/62*** *(2006.01)*

(21) Numéro de dépôt: **11730961.7**

(22) Date de dépôt: **08.07.2011**

(86) Numéro de dépôt international:
**PCT/EP2011/061612**

(87) Numéro de publication internationale:
**WO 2012/007382 (19.01.2012 Gazette 2012/03)**

(54) **PROCÉDÉ DE DÉTECTION D'UNE CIBLE DANS DES IMAGES STÉRÉOSCOPIQUES PAR APPRENTISSAGE ET CLASSIFICATION STATISTIQUE À PARTIR D'UNE LOI DE PROBABILITÉ**

VERFAHREN FÜR DEN NACHWEIS EINES ZIELS AUF STEREOSKOPISCHEN BILDERN MITTELS LERNEN UND STATISTISCHER KLASSIFIZIERUNG AUF DER BASIS EINES WAHRSCHEINLICHLEITSGESETZES

METHOD FOR DETECTING A TARGET IN STEREOSCOPIC IMAGES BY LEARNING AND STATISTICAL CLASSIFICATION ON THE BASIS OF A PROBABILITY LAW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2010 FR 1002950**

(43) Date de publication de la demande:
**22.05.2013 Bulletin 2013/21**

(73) Titulaire: **Commissariat à l'Énergie Atomique et aux Énergies Alternatives 75015 Paris (FR)**

(72) Inventeurs:
• **ALLEZARD, Nicolas**
**F-75014 Paris (FR)**
• **JOURDHEUIL, Loïc**
**F-91400 Orsay (FR)**

(74) Mandataire: **Bordier, Sylvain**
**Marks & Clerk France**
**Conseils en Propriete Industrielle**
**Immeuble Visium**
**22 avenue Aristide Briand**
**94117 Arcueil Cedex (FR)**

(56) Documents cités:
• **STEFAN WALK ET AL: "New features and insights for pedestrian detection", 2010 IEEE CONFERENCE ON COMPUTER VISION AND PATTERN RECOGNITION (CVPR), 13 juin 2010 (2010-06-13), pages 1030-1037, XP031725929, SAN FRANCISCO, CA, USA ISBN: 978-1-4244-6984-0**
• **LIANG ZHAO ET AL: "Stereo- and Neural Network-Based Pedestrian Detection", IEEE TRANSACTIONS ON INTELLIGENT TRANSPORTATION SYSTEMS, vol. 1, no. 3, 1 septembre 2000 (2000-09-01), XP011028377, IEEE, PISCATAWAY, NJ, USA ISSN: 1524-9050**
• **DIAZ M E ET AL: "A gray-level 2D feature detector using circular statistics", PATTERN RECOGNITION LETTERS, vol. 18, no. 11-13, 1 novembre 1997 (1997-11-01), pages 1083-1089, XP004117905, ELSEVIER, AMSTERDAM, NL ISSN: 0167-8655, DOI: 10.1016/S0167-8655(97) 00085-8**
• **YASSINE BENABBAS, NACIM IHADDADENE, CHAABANE DEJRABA: "Global Analysis of Motion Vectors for Event Detection in Crowd Scenes", ELEVENTH IEEE INTERNATIONAL WORKSHOP ON PERFORMANCE EVALUATION OF TRACKING AND SURVEILLANCE, 25 juin 2009 (2009-06-25), pages 109-116, XP002630185,**

- **ULUSOY ET AL: "A statistical approach to sparse multi-scale phase-based stereo", PATTERN RECOGNITION, vol. 40, no. 9, 3 mai 2007 (2007-05-03), pages 2504-2520, XP022058964, ELSEVIER, GB ISSN: 0031-3203, DOI: 10.1016/J.PATCOG.2006.10.019**
- **STEFAN WALK ET AL: "Disparity Statistics for Pedestrian Detection: Combining Appearance, Motion and Stereo", 5 septembre 2010 (2010-09-05), COMPUTER VISION - ECCV 2010 : 11TH EUROPEAN CONFERENCE ON COMPUTER VISION, HÇRAKLEION, CRETE, GREECE,, XP019150792, ISBN: 978-3-642-15566-6 pages 182-195, le document en entier**

**Description**

La présente invention concerne un procédé de détection et de reconnaissance de cibles dans des images stéréoscopiques. Elle peut notamment s'appliquer dans tout domaine utilisant un couple de cameras stéréoscopiques pour détecter des objets. Il peut s'agir par exemple d'applications de surveillance, d'assistance ou encore de sécurité embarquées à bord d'un véhicule.

La problématique générale est de rechercher dans des images la présence de cibles de types divers, qu'il s'agisse d'objets ou de personnes, les cibles présentant certaines caractéristiques conformes à un modèle. Par exemple, il peut s'agir d'un modèle paramétrique, comme un rapport entre largeur et hauteur qui doit valoir une valeur $\lambda$ donnée ou encore d'un modèle tridimensionnelle de type CAO.

Une telle méthode de détection de cibles basée sur un modèle devient difficile à mettre en oeuvre en cas de grande variabilité d'apparence des cibles. Par exemple, l'apparence d'une personne peut varier grandement en fonction de sa posture ou de son habillement. La méthode peut même devenir impossible à mettre en oeuvre. Par exemple, l'exploitant d'un parking aura d'immenses difficultés à détecter des camions dès lors qu'il ne dispose pas des modèles CAO des différents types de camion.

Dans ces cas où la modélisation des cibles s'avère difficile voire impossible, une solution connue consiste à mettre en oeuvre une étape d'apprentissage statistique OFF-LINE, c'est-à-dire préalablement à l'exploitation du système de détection, et une étape de classification ON-LINE, c'est-à-dire simultanément à l'exploitation du système de détection. En fait, l'étape de classification fait partie intégrante du processus de détection: si l'on considère un système pour détecter des piétons, une détection a lieu dès lors qu'une cible a été classifiée "piéton".

L'étape préalable d'apprentissage statistique consiste à apprendre à reconnaître des cibles grâce à un algorithme, qui extrait automatiquement les paramètres les plus pertinents des cibles, afin de les discriminer par rapport aux autres éléments pouvant être présents sur les images. Il s'agit en fait de constituer des modèles statistiques de données extraites d'une collection d'images "typiques" de cibles. Ces modèles statistiques sont utilisés plus tard lors de l'étape simultanée de classification. L'étape simultanée de classification est effectuée en temps réel sur les images les plus récemment fournies par les caméras. Il s'agit de comparer de nouvelles données extraites des images "réelles" aux modèles statistiques constitués durant l'étape d'apprentissage à partir d'images "typiques".

Ainsi, des systèmes permettent d'ores et déjà de détecter et reconnaître des objets ou des personnes, fixes ou mobiles, grâce à des couples d'images fournis par des cameras calibrées formant une tête stéréoscopique, par exemple deux caméras disposées horizontalement.

Un tel système calcule tout d'abord, pour chaque couple d'images, une carte de disparité représentant le décalage entre l'image de gauche et l'image de droite. Plus exactement, la disparité est la différence en position de pixel entre deux images pour un même point de la scène observé. Par triangulation, cet écart permet de calculer la coordonnée z des pixels de l'image et donc d'obtenir des informations de profondeur (3D) sur la scène observée. Parfois représentée par des niveaux de gris, une telle carte de disparité est aussi communément appelée image de disparité.

Puis, un tel système modélise l'apparence des objets présents sur les images lors d'un processus d'apprentissage statistique. Ce processus se base sur un ensemble de descripteurs calculés dans l'image, comme les niveaux de gris, les données RGB (Red-Green-Blue), les dérivées successives du signal, des convolutions par un ensemble de filtres spécifiques ou encore des histogrammes.

Enfin, les flux vidéo fournis par les deux caméras permettent de calculer une carte des positions 2D estimées des pixels pour chacune des deux caméras gauche et droite. Cette information est importante pour distinguer les objets en mouvement. Elle permet de mieux segmenter les objets, notamment lorsque la caméra est fixe ou encore lorsque le mouvement des objets est suffisamment différent de celui de la caméra, comme par exemple un piéton qui traverse la rue devant une voiture en marche portant les caméras.

Par-exemple, l'article "Improved Multi-Person Tracking with Active Occlusion Handling" (A. Ess, K. Schindler, B. Leibe, L. van Gool, ICRA Workshop on People Detection and Tracking, May 2009) décrit une telle méthode de détection, de reconnaissance et même de suivi d'objets par utilisation d'une tête stéréoscopique. Elle met en oeuvre plusieurs étapes pour intégrer les informations de luminance, de position et de profondeur décrites précédemment. Cette méthode est basée sur la détection préalable de zones d'intérêt et sur la représentation de ces zones par un dictionnaire de motifs élémentaires. L'étape d'apprentissage comporte une étape d'apprentissage d'un "Codebook of Local Appearance", qui est un dictionnaire de motif visuels élémentaires que l'on peut rencontrer sur les objets, et une étape d'apprentissage des "Implicit Shape Models", qui sont les positions relatives de ces motifs élémentaires sur les objets. Lors de l'étape de classification en vue de détecter des objets, un premier détecteur recherche, dans les images et à partir du dictionnaire, des zones d'intérêt susceptibles de contenir des objets, puis un deuxième détecteur recherche des objets dans les zones d'intérêt. Enfin, un mécanisme de vote permet la reconnaissance des objets.

Un inconvénient majeur de cette méthode est qu'elle repose sur plusieurs étapes successives de pré-détection, d'abord pré-détection de zones d'intérêt, puis d'objets dans les zones d'intérêt et puis seulement reconnaissance des objets par classification. Il peut en résulter un nombre important de non-détections, car ces étapes successives de pré-détections reviennent d'une certaine manière à un mécanisme de "tout ou rien" : si une étape en amont donne un résultat négatif, les étapes en aval ne sont même pas mises en oeuvre, alors qu'elles auraient pu s'avérer fructueuses en "corrigeant" la non-détection de l'étape amont. Et si, pour tenter d'atténuer ce mécanisme de "tout ou rien", on augmente le nombre de zones d'intérêt, alors on assiste à une véritable explosion des temps de calcul.

Un autre exemple d'état de l'art est le document :

New features and insights for pedestrian detection, Stefan Walk, Nikodem Majer, Konrad Schindler, Bernt Schiele, publié à CVPR2010, IEEE CONFERENCE ON COMPUTER VISION AND PATTERN RECOGNITION, 13-18 Juin 2010, SAN FRANCISCO, CA, USA, pages 1030-1037, ISBN: 978-1-4244-6984-0.

L'invention a notamment pour but de limiter les non-détections en évitant d'enchaîner de multiples phases de pré-détection durant la phase de classification. Pour cela, l'invention propose notamment une méthode d'apprentissage statistique des objets permettant de fusionner à bas niveau les informations de luminance, de mouvement et de profondeur sur les objets. A cet effet, l'invention a pour objet un procédé de détection d'une cible présente dans au moins deux images d'une même scène capturées simultanément par des caméras distinctes. Le procédé comporte une étape préalable d'apprentissage de cibles dans des conditions de mise au point et, dans des conditions d'exploitation, une étape simultanée de classification d'objets présents sur les images, la cible étant réputée détectée dès lors qu'un objet est classifié comme étant l'une des cibles apprises pendant l'étape d'apprentissage. L'étape d'apprentissage des cibles inclut une étape de modélisation des données X correspondant à une zone d'intérêt dans les images par une loi de distribution P paramétrique telle que $P(X) = P(X_{2d}, X_{3d}, X_T) = P(X_{2d})P(X_{3d})P(X_T)$ où $X_{2d}$ sont les données de luminance dans la zone d'intérêt, $X_{3d}$ sont les données de profondeur dans la zone d'intérêt et $X_T$ sont les données de mouvement dans la zone d'intérêt.

L'étape de modélisation comportant une étape de calcul, en chaque pixel de la zone d'intérêt dans une des deux images, des valeurs dx et dy des dérivées de la luminance de pixel suivant deux directions orthogonales, $P(X_{2d})$ pouvant être une loi de Von Mises-Fisher sur la sphère unité de $\mathfrak{R}^3$ d'indice de concentration $k_{2d}$ et de vecteur moyen $\mu_{2d}$, $P(X_{2d})$ décrivant la distribution des vecteurs unitaires normaux aux plans d'équation z=dx.x+dy.y correspondant à tous les pixels de la zone d'intérêt, $P(X_{2d})$ étant obtenue par le produit des différentes lois de Von Mises-Fischer modélisant les données de luminance $X_{2d}$.

Dans un mode de réalisation préférentiel, l'étape de modélisation peut également comporter une étape de calcul, en chaque pixel de la zone d'intérêt dans une des deux images, des valeurs mx et my des dérivées de la position de pixel suivant deux directions orthogonales, $P(X_T)$ pouvant être une loi de Von Mises-Fisher sur la sphère unité de $\mathfrak{R}^3$ d'indice de concentration $k_T$ et de vecteur moyen $\mu_T$, $P(X_T)$ décrivant la distribution des vecteurs unitaires normaux aux plans d'équation z=mx.x+my.y correspondant à tous les pixels de la zone d'intérêt.

Dans un mode de réalisation préférentiel, l'étape de modélisation peut également comporter une étape de calcul, en chaque pixel de la zone d'intérêt dans l'image de disparité correspondant aux deux images, des valeurs px et py des dérivées de la profondeur de pixel suivant deux directions orthogonales, $P(X_{3d})$ pouvant être une loi de Von Mises-Fisher sur la sphère unité de $\mathfrak{R}^3$ d'indice de concentration $k_{3d}$ et de vecteur moyen $\mu_{3d}$, $P(X_{3d})$ décrivant la distribution des vecteurs unitaires normaux aux plans d'équation z=px.x+py.y correspondant à tous les pixels de la zone d'intérêt.

Avantageusement, un vecteur unitaire ayant pour coordonnées $(\alpha,\beta)$ dans la sphère unité de $\mathfrak{R}^3$, la loi de Von Mises-Fischer peut être $\alpha$-périodique et/ou $\beta$-périodique de période $\dfrac{2\pi}{n}$ où n entier.

Dans un autre mode de réalisation, $P(X_{3d})$ peut être une loi normale d'écart-type $\sigma_{3d}$ et de moyenne $\mu_{3d}$, $P(X_{3d})$ décrivant la distribution de la profondeur de pixel dans la zone d'intérêt.

Par exemple, la zone d'intérêt peut être choisie par utilisation d'un classifieur de type boosting.

La présente invention a encore pour principal avantage qu'elle ne fait pas augmenter le taux de fausses alarmes pour un même taux de détection. De plus, présentant une complexité raisonnable, elle peut être mise en oeuvre même sur les matériels les plus légers.

D'autres caractéristiques et avantages de l'invention apparaîtront à l'aide de la description qui suit faite en regard de dessins annexés qui représentent :

- les figures 1a et 1b, par une image 2D et une image 3D respectivement, un exemple d'image 2D en niveaux de gris ainsi que son interprétation, selon l'invention, comme une surface 3D;
- la figure 2, par un diagramme de séquence, un exemple de mise en oeuvre de l'invention.

La présente invention propose de fusionner les données au plus bas niveau, afin de permettre un apprentissage conjoint des informations 2D de luminance $X_{2d}$, des informations 3D de profondeur $X_{3d}$ et des informations temporelles de mouvement $X_T$. Pour cela, une image est créée, image dont chaque pixel contient l'ensemble des données $X$ de base calculées à partir des informations provenant des trois sources. La fusion des données est réalisée par utilisation d'une loi $P$ de probabilité jointe entre les données $X_{2d}$, $X_{3d}$ et $X_T$ que l'on suppose indépendantes, c'est-à-dire telles que :

$$P(X) = P(X_{2d}, X_{3d}, X_T) = P(X_{2d})P(X_{3d})P(X_T)$$

Ainsi, les données $X$ issues d'une zone d'intérêt rectangulaire quelconque de l'image peuvent être modélisées par cette loi $P$ fusionnant les informations de luminance $X_{2d}$, de profondeur $X_{3d}$ et de mouvement $X_T$.

La description qui suit correspond à un exemple de mise en oeuvre de l'invention à partir d'une image gauche et d'une image droite fournies par deux caméras disposées horizontalement. Dans ce mode de réalisation, les données de luminance, de profondeur et de mouvement des pixels d'une zone d'intérêt rectangulaire de l'image peuvent avantageusement être représentées par un descripteur peu couteux à calculer, à savoir en vecteurs de caractéristiques $\overrightarrow{X_{2d} X_{3d} X_T}$ prêts à être comparés.

En effet, les données du signal de luminance et de mouvement des pixels, qui sont toutes deux des données vectorielles 2D, peuvent être l'une et l'autre modélisées par une loi de probabilité sur données sphériques 3D.

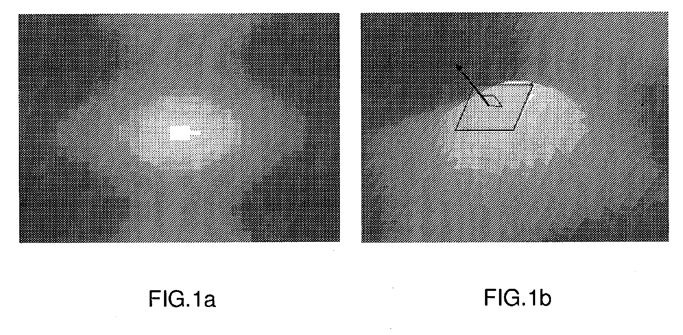

D'une part, le signal de luminance peut avantageusement être représenté par ses dérivées par rapport à deux directions orthogonales du plan de l'image. A titre d'illustration, l'image 2D en niveaux de gris illustrée par la figure 1a, chaque niveau de gris traduisant une valeur de luminance d'un pixel, peut être interprétée comme une surface, comme illustrée par la figure 1b, dont les hauteurs dans une direction Z sont données par la luminance des pixels. Ainsi, en un point quelconque de la surface peut être construit le plan tangent à la surface, plan d'équation z=a.x+b.y où a=dx est la valeur de la dérivée de la luminance par rapport à une direction X au point considéré et b=dy est la valeur de la dérivée de la luminance par rapport à une direction Y au point considéré. De ce plan tangent peut être facilement déduit le vecteur unitaire normal à la surface au point considéré, qui est orthogonal au plan. Ainsi, l'information de luminance d'un pixel peut être décrite par ce premier vecteur unitaire. Par exemple, le calcul de la dérivée du signal de luminance peut se faire aisément par masque de convolution 2D, dans l'image droite par exemple. Il s'agit là d'un traitement classique en traitement d'images.

D'autre part, de manière similaire, le déplacement d'un pixel entre deux images qui se suivent dans le temps peut avantageusement lui aussi être représenté par ses dérivées par rapport à deux directions orthogonales du plan de l'image, ainsi que permettre de construire un plan tangent en un point quelconque d'une pseudo-surface, plan d'équation z=a.x+b.y où a=mx est la valeur de la dérivée de la position par rapport à une direction X au point considéré et b=my est la valeur de la dérivée de la position par rapport à une direction Y au point considéré, ainsi que permettre de construire le vecteur unitaire normal à la pseudo-surface au point considéré. Ainsi, l'information de mouvement d'un pixel peut être décrite par ce deuxième vecteur unitaire. Par exemple, le calcul du déplacement des pixels entre un instant t-1 et un instant peut se faire aisément par corrélation, dans l'image droite par exemple. Il s'agit là d'un traitement classique en traitement d'images.

Il faut noter que l'invention permet de modéliser, dans une même loi, à la fois la direction des vecteur 2D, mais aussi leurs magnitudes.

Enfin, toujours de manière similaire, la profondeur d'un pixel peut avantageusement elle aussi être représentée par ses dérivées par rapport à deux directions orthogonales du plan de l'image et être décrite par un vecteur unitaire tangent à un plan d'équation z=a.x+b.y avec a=px est la valeur de la dérivée de la profondeur par rapport à une direction X au pixel considéré et b=py est la valeur de la dérivée de la profondeur par rapport à une direction Y au pixel considéré. Il faut noter que plusieurs opérations préalables sur les images gauche et droite sont effectuées: rectification des images gauche et droite pour le calcul de la carte de disparité, calcul de la disparité entre l'image droite et gauche par corrélation et enfin calcul de la carte de profondeur de l'image droite. Il s'agit là de traitements classiques en traitement d'images.

Ainsi, les données de luminance, de profondeur et de mouvement peuvent être transformées de manière à être chacune d'entre elles représentée par un point 3D sur la sphère unité, c'est-à-dire par trois couples d'angles $(\alpha, \beta)$ pour les données provenant des trois sources.

Or, la distribution de ces points sur la sphère unité peut être efficacement modélisée par une loi P de Von Mises-Fisher d'indice de concentration $k$ réel et de vecteur moyen $\mu$ sur la sphère unité :

$$P(X/k,\mu) = \frac{k}{4\pi\sinh(k)} e^{(k\mu^T X)}$$

où *sinh* désigne la fonction sinus hyperbolique et $\mu^T$ désigne le vecteur transposé de $\mu$. Si l'on pose $X = (\alpha, \beta)$ et $\mu = (\alpha_\mu, \beta_\mu)$, la loi P est donc donnée par:

$$P(X/k,\mu) = \frac{k}{4\pi\sinh(k)} e^{k(\cos(\beta_\mu)\times\cos(\beta)+\sin(\beta_\mu)\sin(\alpha_\mu)\times\sin(\beta)\sin(\alpha)+\sin(\beta_\mu)\cos(\alpha_\mu)\times\sin(\beta)c}$$

Au total, la loi de probabilité P représentant les données d'une des sources peut donc être modélisée par trois valeurs scalaires: l'indice $k$ réel et les deux angles $\alpha_\mu$ et $\beta_\mu$. Par ailleurs, P est $\alpha$-périodique et $\beta$-périodique de période $2\pi$.

Cependant, une telle loi P est uni-modale et donc mal adaptée aux ensembles de points présentant plusieurs modes ou points de concentration. Pour surmonter cet inconvénient et plutôt que de mettre classiquement en oeuvre une mixture de lois très coûteuse en temps de calcul sur l'ensemble d'une image, la présente invention propose avantageusement d'utiliser plusieurs lois de périodes différentes. Plus précisément, les données de luminance $X_{2d}$ de chaque zone d'intérêt considérée peuvent être modélisées par plusieurs lois de probabilité périodiques dont les périodes diffèrent les unes des autres. Il en va de même pour la modélisation des données de profondeur $X_{3d}$ et pour la modélisation des données de mouvement $X_T$. Ceci permet de réduire drastiquement les temps de calcul. Ces lois de probabilité périodiques peuvent être des lois de Von Mises-Fischer. En effet, il est possible de définir des lois de Von Mises-Fisher $\alpha$-périodiques ou $\beta$-périodiques de période $\dfrac{2\pi}{n}$ où n entier. Par exemple, la loi de Von Mises Fisher d'$\alpha$-période $\dfrac{2\pi}{n}$ est donnée par:

$$P(X/k,\mu,n) = cst\, e^{k(\cos(\beta_\mu)\times\cos(\beta)+\sin(\beta_\mu)\sin(\beta)\times\sin(n\alpha_\mu)\sin(n\alpha)+\sin(\beta_\mu)\sin(\beta)\times\cos(n\alpha_\mu)\cos(n\alpha))}$$

où *cst* désigne une constante réelle. Les différentes périodes pour chaque type de données sont ainsi déterminées par le nombre n. Pour chaque type de données (luminance, profondeur, mouvement), les différentes lois de probabilité périodiques sont combinées de manière à ne former qu'une seule loi de probabilité $P(X_{2d})$, $P(X_{3d})$ ou $P(X_T)$. En supposant les lois de périodes différentes indépendantes entre elles, une loi de distribution jointe utilisant N loi de périodes différentes, où N entier, pour décrire les pixels d'une zone d'intérêt rectangulaire de l'image, chaque loi $P(X_{2d})$ $P(X_{3d})$ ou $P(X_T)$ peut être le produit des différentes lois de probabilité périodiques :

$$P(X/k,\mu) = \prod_{j=1}^{N} P(X/k_j, \mu_j, n_j)$$

où k et $\mu$ désignent des vecteurs rassemblant l'ensemble des paramètres des N lois de distribution.

Il faut noter que, si les données $X_{3d}$ sont de mauvaise qualité, $P(X_{3d})$ peut être une loi normale d'écart-type $\sigma_{3d}$ et de moyenne $\mu_{3d}$ définie par:

$$P(X_{3d} / \sigma_{3d}, \mu_{3d}) = \frac{1}{2\pi\sqrt{\sigma_{3d}}} e^{\frac{1}{2}\frac{(x_{3d}-\mu_{3d})^2}{\sigma_{3d}^2}}$$

La présente invention propose également une méthode pour choisir les zones les plus pertinentes pour la reconnaissance de cibles, c'est-à-dire les zones d'intérêt rectangulaires devant être décrites par une loi jointe comme explicité précédemment. Pour cela, l'invention propose avantageusement un classifieur de type "boosting", ainsi qu'une métrique pertinente entre de tels descripteurs.

Les techniques de type "boosting" regroupent des méthodes d'apprentissage qui permettent de construire un classifieur dit fort à partir de plusieurs classifieurs dits faible. C'est un algorithme itératif qui choisit de façon optimale à chaque boucle un nouveau classifieur faible. Le classifieur faible réalise une partition de l'espace d'entrée. La valeur renvoyé par le classifieur est fonction de la zone dans laquelle se trouve le point représenté par les données $X_{2d}$, $X_{3d}$ et $X_T$. Un score de classification indique quelle classe d'objet est la plus vraisemblable en fonction des données.

A l'issue de l'étape d'apprentissage, un ensemble de descripteurs de luminance, de profondeur, et de mouvement est obtenu à partir d'une collection d'exemples d'images représentant des objets O dont les classes sont connues. A chaque exemple est attaché un poids $w_i$ qui varie au cours de l'algorithme. Les paramètres des lois de probabilité $P(X_{2d}/O, w_i)$, $P(X_{3d}/O,w_i)$, et $P(X_T/O,w_i)$ des données sachant les classes sont calculés et pondérées par $w_i$. Les votes du classifieur faible sont calculés en fonction des différentes partitions de l'espace qu'il réalise et en fonction du poids des exemples.

Durant l'étape de classification, une fois le vecteur de la zone de l'image calculé, la log-vraisemblance $L(Z/O_j)$ est calculée pour les différents objets $O_j$. Puis les probabilités $P(O_j / Z)$ sont calculées par la règle de Bayes. Avantageusement, la zone d'intérêt choisie peut être celle associée à la classe j pour laquelle la probabilité $P(O_j/Z)$ est la plus grande. Le classifieur renvoie le score calculé a l'apprentissage. Les scores de l'ensemble des classifieurs/descripteurs locaux sont sommés pour produire le score final de la zone d'intérêt.

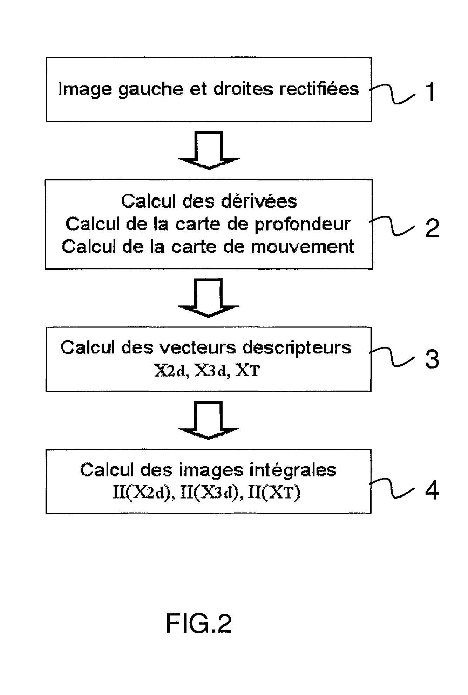

La figure 2 illustre par un diagramme un exemple de séquence d'étapes permettant de mettre en oeuvre l'invention à partir de l'image gauche et de l'image droite fournies par les deux caméras disposées horizontalement. Tout d'abord, les images gauche et droite peuvent être rectifiées lors d'une étape 1. Puis, la disparité entre l'image droite et gauche, la carte de profondeur de l'image droite, la dérivée du signal de luminance et le déplacement des pixels peuvent être calculés lors d'une étape 2. Puis, lors d'une étape 3, à chaque pixel i de l'image droite peut être associé un vecteur contenant la profondeur du pixel i ($z_i$), la dérivée du signal de luminance au pixel i suivant les lignes et les colonnes ($Dx_i$ et $Dy_i$) de l'image et le déplacement du pixel i entre les instants t-1 et t ($mx_i$ et $my_i$). Enfin, lors d'une étape 4, des images intégrales peuvent être calculées pour permettre des sommations rapides. Les étapes 1, 2, 3 et 4 sont détaillées dans la suite de la présente demande.

Comme explicité précédemment, pour modéliser une zone Z de l'image selon l'invention, l'ensemble des données $X_{2d}$, $X_{3d}$ et $X_T$ de ladite zone Z est modélisé par une loi de probabilité. Puis, lors du processus de détection, les données issues d'une zone de l'image sont comparées aux lois de probabilité calculés pour chaque classe d'objet. La probabilité que l'ensemble des données $X_i$ des pixels de la zone Z soit issu de la loi de probabilité associée à un objet O est donnée par:

$$P(Z / O) = \prod_i P(X_i / O) = \prod_i (P(X_{2d}i / O)P(X_{3d}i / O)P(X_T i / O))$$

Le logarithme de cette probabilité est donnée par:

$$L(Z / O) = \ln(\prod_i P(Xi / O)) = \sum_i \ln(P(Xi / O)) = \sum_i \ln(P(X_{2d}i / O)P(X_{3d}i / O)P(X_T i / O))$$

$$L(Z/O) = \sum_i \ln(P(X_{2d}i/O)) + \sum_i \ln(P(X_{3d}i/O)) + \sum_i \ln(P(X_T i/O))$$

Avec les formules suivantes pour chaque loi de probabilité :

$$P(X_{3d}/\sigma_{3d}^O, \mu_{3d}^O) = \frac{1}{2\pi\sqrt{\sigma_{3d}^O}} e^{\frac{1}{2}\frac{\left(x_{3d}-\mu_{3d}^O\right)^2}{\sigma_{3d}^O{}^2}}$$

$$P(X_{2d}/k_{2d}^O, \mu_{2d}^O) = \frac{k_{2d}^O}{4\pi \sinh(k_{2d}^O)} e^{(k_{2d}^O \mu_{2d}^{O\,t} x_{2d})}$$

$$P(X_T/k_T^O, \mu_T^O) = \frac{k_T^O}{4\pi \sinh(k_T^O)} e^{(k_T^O \mu_T^{O\,t} x_T)}$$

$$\sum_i \ln(P(X_{2d}i/O)) = \sum_i \ln(\frac{k_{2d}^O}{4\pi \sinh(k_{2d}^O)}) + \sum_i k_{2d}^O \mu_{2d}^{O\,t} x_{2d}i$$

$$= N \times \ln(\frac{k_{2d}^O}{4\pi \sinh(k_{2d}^O)}) + k_{2d}^O \mu_{2d}^{O\,t} \sum_i x_{2d}i$$

$$\sum_i \ln(P(X_T i/O)) = \sum_i \ln(\frac{k_T^O}{4\pi \sinh(k_T^O)}) + \sum_i k_T^O \mu_T^{O\,t} x_T i$$

$$= N \times \ln(\frac{k_T^O}{4\pi \sinh(k_T^O)}) + k_T^O \mu_T^{O\,t} \sum_i x_T i$$

Au final, le calcul de $L(Z/O_j)$ nécessite le calcul des sommes des vecteurs $X_{2d}i$ et $X_T^j$ pour les sources 2D et de mouvement, des valeurs scalaires $z_j$ et $z_i^2$ pour la source 3D sur la zone en question, puis le calcul du produit scalaire entre les vecteurs sommes obtenus et un vecteur de paramètres pour chaque classe d'objet à considérer.

Puis, les données $\overrightarrow{d_{2d}}$, $\overrightarrow{d_T}$ et $\overrightarrow{d_{3d}}$ issues respectivement du calcul de la dérivée, de la carte de profondeur et de mouvement sont transformées afin d'être comparées facilement aux différents modèles d'objets. Au départ ces données sont sous la forme:

$$\vec{d}_{2d} = \begin{bmatrix} d_x \\ d_x \\ Z_{2d} \end{bmatrix}$$

$$\vec{d}_T = \begin{bmatrix} m_x \\ m_x \\ Z_T \end{bmatrix}$$

$$d_{3d} = z_{3d}$$

Elles sont transformées en $x_{2d} = \dfrac{\vec{d}_{2d}}{\left\|\vec{d}_{2d}\right\|}$, $x_T = \dfrac{\vec{d}_T}{\left\|\vec{d}_T\right\|}$ et $x_{3d} = \begin{bmatrix} z_{3d} \\ z_{3d}^2 \end{bmatrix}$, donc:

$$\vec{x}_{2d} = \begin{bmatrix} \dfrac{d_x}{\sqrt{d_x^2 + d_y^2 + Z_{2d}^2}} \\ \dfrac{d_y}{\sqrt{d_x^2 + d_y^2 + Z_{2d}^2}} \\ \dfrac{Z_{2d}}{\sqrt{d_x^2 + d_y^2 + Z_{2d}^2}} \end{bmatrix} = \begin{bmatrix} \cos(\beta_{2d}) \\ \sin(\beta_{2d})\sin(\alpha_{2d}) \\ \sin(\beta_{2d})\cos(\alpha_{2d}) \end{bmatrix}$$

$$\vec{x_T} = \begin{bmatrix} \dfrac{m_x}{\sqrt{m_x^2 + m_y^2 + Z_T^2}} \\ \dfrac{m_y}{\sqrt{m_x^2 + m_y^2 + Z_T^2}} \\ \dfrac{Z_T}{\sqrt{m_x^2 + m_y^2 + Z_T^2}} \end{bmatrix} = \begin{bmatrix} \cos(\beta_T) \\ \sin(\beta_T)\sin(\alpha_T) \\ \sin(\beta_T)\cos(\alpha_T) \end{bmatrix}$$

$$\vec{x_{3d}} = \begin{bmatrix} \dfrac{dz_x}{\sqrt{dz_x^2 + dz_y^2 + Z_{3d}^2}} \\ \dfrac{dz_y}{\sqrt{dz_x^2 + dz_y^2 + Z_{3d}^2}} \\ \dfrac{Z_{3d}}{\sqrt{dz_x^2 + dz_y^2 + Z_{3d}^2}} \end{bmatrix} = \begin{bmatrix} \cos(\beta_{3d}) \\ \sin(\beta_{3d})\sin(\alpha_{3d}) \\ \sin(\beta_{3d})\cos(\alpha_{3d}) \end{bmatrix}$$

Il faut noter que ces transformations sont très rapides a effectuer et qu'elles diffèrent peu des opérations classiques en traitement d'image. En effet, $d_x^2 + d_y^2$ correspond au calcul de la magnitude du gradient au carré. Lors de la transformation, une constante $Z_{2d}$ est ajoutée à la magnitude au carré avant de calculer sa racine. Cette constante permet de paramétrer plus finement la transformation en fonction des valeurs de magnitude que l'on rencontre typiquement dans les images. Elle permet d'adapter la transformation à des valeurs de magnitudes trop fortes ou trop faibles.

Ensuite, les images intégrales de ces données sont calculées pour permettre leurs sommations rapides. Le calcul de la somme d'un vecteur de taille n sur une zone de taille quelconque de l'image se fait ainsi à coût fixe, ne nécessitant que n°x°2 additions, n soustractions et 4°x°n accès aux données des images. Il faut noter que, dans le cas d'un calcul classique, le nombre d'opérations dépend de la surface de la zone et devient prohibitif dès 10°x°10 pixels.

Durant la phase de détection, l'image est parcourue par une zone d'intérêt dont les positions et les tailles sont fonction du plan du sol. Une boite d'intérêt 3D est définie dans la scène. Cette boite 3D va être successivement déplacée sur un ensemble de positions candidates à contenir le ou les objets recherchés.

Pour chaque position, la projection de la boite 3D est calculée et un vecteur décrivant le contenu de la zone 2D est calculé. Puis un test de reconnaissance est effectué sur ces données. Le calcul de la fonction de vraisemblance entre des descripteurs locaux et les modèles résultant de l'apprentissage s'effectue par l'intermédiaire de la sommation des vecteurs descriptifs sur la zone en question. Ces sommes sont calculées par la technique des images intégrales qui permettent de calculer efficacement des sommes de valeurs sur une aire 2D. Enfin, la zone est ajoutée à la liste des zones positives ou elle est rejetée.

L'invention décrite précédemment a encore pour principal avantage de fournir un modèle à la fois plus fidèle et plus simple des données extraites des différentes images, qu'il s'agisse de la luminance, de la profondeur ou du mouvement des pixels. La loi de probabilité utilisée pour les vecteurs 2D, à savoir le signal image et le mouvement dans l'image, permet la modélisation d'une source par seulement trois paramètres, à savoir deux angles et un paramètre de concentration, tout en étant plus performante qu'une loi jointe classique linéaire ou circulaire.

De plus, pour une détection rapide, elle fusionne les informations 3D, 2D et de mouvement au plus bas niveau dans les descripteurs locaux, les descripteurs les plus pertinents étant ensuite choisis par l'algorithme de boosting lors de la phase d'apprentissage. Par ailleurs, les classifieurs y sont organisés en cascade dont les étages sont de plus en plus complexes. Cette technique permet d'accélérer la recherche, car les tests les plus complexes ne sont appliqués qu'aux zones de l'image les plus ambiguës. L'invention propose ainsi un processus très simple et très régulier, qui peut être efficacement implémenté tant sur des ordinateurs du marché que sur des architectures dédiées.

Enfin, l'invention décrite précédemment est applicable à toutes sortes d'applications de reconnaissance de cibles, dès lors qu'elles sont basées sur l'utilisation de capteurs vidéos stéréoscopiques et l'utilisation d'une méthode de classification statistique comportant une phase préalable d'apprentissage suivie d'une phase simultanée de détection. Il peut s'agir par exemple d'applications de surveillance, comme la surveillance d'une zone à l'avant ou à l'arrière d'un véhicule pour éviter les collisions, la surveillance d'une zone d'un bâtiment, l'aide aux personnes handicapées ou encore la navigation de robots mobiles autonomes.

## Revendications

1. Procédé de détection d'une cible présente dans au moins deux images d'une même scène capturées simultanément par des caméras distinctes, le procédé comportant:

   - dans des conditions de mise au point, une étape préalable d'apprentissage de cibles, et;
   - dans des conditions d'exploitation, une étape simultanée de classification d'objets présents sur les images, la cible étant réputée détectée dès lors qu'un objet est classifié comme étant l'une des cibles apprises pendant l'étape d'apprentissage;

   le procédé étant **caractérisé en ce que** l'étape d'apprentissage des cibles inclut une étape de modélisation des données X correspondant à une zone d'intérêt dans les images par une lol de distribution paramétrique P telle que $P(X) = P(X_{2d},X_{3d},X_T) = P(X_{2d})P(X_{3d})P(X_T)$ où $X_{2d}$ sont les données de luminance dans la zone d'intérêt, $X_{3d}$ sont les données de profondeur dans la zone d'intérêt et $X_T$ sont les données de mouvement dans la zone d'intérêt, l'étape de modélisation comportant une étape de calcul, en chaque pixel de la zone d'intérêt dans une des deux images, des valeurs dx et dy des dérivées de la luminance de pixel suivant deux directions orthogonales, les données de luminance $X_{2d}$ de la zone d'intérêt étant modélisées par plusieurs lois de Von Mises-Fischer $\alpha$-périodique et/ou $\beta$-périodique dont les périodes diffèrent les unes des autres, chaque loi décrivant une distribution des vecteurs unitaires normaux aux plans d'équation z=dx.x+dy.y correspondant à tous les pixels de la zone d'intérêt, $P(X_{2d})$ étant obtenue par le produit des différentes lois de Von Mises-Fischer modélisant les données de luminance $X_{2d}$.

2. Procédé selon la revendication 1, dans lequel l'étape de modélisation comporte une étape de calcul, en chaque pixel de la zone d'intérêt dans une des deux images, des valeurs mx et my du mouvement du pixel suivant deux directions orthogonales par rapport à une image précédente, les données de mouvements $X_T$ de la zone d'intérêt étant modélisées par plusieurs lois de Von Mises-Fischer $\alpha$-périodique et/ou $\beta$-périodique dont les périodes diffèrent les unes des autres, chaque loi décrivant une distribution des vecteurs unitaires normaux aux plans d'équation z=mx.x+my.y correspondant à tous les pixels de la zone d'intérêt, $P(X_T)$ étant obtenue par le produit des différentes lois de Von Mises-Fischer modélisant les données de mouvement $X_T$.

3. Procédé selon l'une des revendications 1 et 2, dans lequel l'étape de modélisation comporte une étape de calcul, en chaque pixel de la zone d'intérêt dans l'image de disparité correspondant aux deux images, des valeurs px et py des dérivées de la profondeur de pixel suivant deux directions orthogonales, les données de profondeur $X_{3d}$ de la zone d'intérêt étant modélisées par plusieurs lois de Von Mises-Fischer $\alpha$-périodique et/ou $\beta$-périodique dont les périodes diffèrent les unes des autres, chaque loi décrivant décrivant une distribution des vecteurs unitaires normaux aux plans d'équation z=px.x+py.y correspondant à tous les pixels de la zone d'intérêt, $P(X_{3d})$ étant obtenue par le produit des différentes lois de Von Mises-Fischer modélisant les données de profondeur $X_{3d}$.

4. Procédé selon la revendication 1, dans lequel la zone d'intérêt est choisie par utilisation d'un classifieur de type boosting.

**EP 2 593 907 B1**

**1.** Verfahren zum Erkennen eines Ziels, das sich in wenigstens zwei Bildern derselben Szene befindet, die gleichzeitig von getrennten Kameras aufgenommen wurden, wobei das Verfahren Folgendes beinhaltet:

- einen Vorabschritt, unter Einrichtungsbedingungen, des Lernens von Zielen, und
- einen gleichzeitigen Schritt, unter Betriebsbedingungen, des Klassifizierens von Objekten, die auf den Bildern vorhanden sind, wobei das Ziel als erkannt angesehen wird, sobald ein Objekt als eines der beim Lernschritt erlernten Ziele klassifiziert ist;

wobei das Verfahren **dadurch gekennzeichnet ist, dass** der Schritt des Lernens von Zielen einen Schritt des Modellierens von Daten X, die einer Zone von Interesse in den Bildern entsprechen, durch ein Parameterverteilungsgesetz P beinhaltet, so dass $P(X) = P(X_{2d}, X_{3d}, X_T) = P(X_{2d})P(X_{3d})P(X_T)$ ist, wobei $X_{2d}$ die Luminanzdaten in der Zone von Interesse sind, $X_{3d}$ die Tiefendaten in der Zone von Interesse sind und $X_T$ die Bewegungsdaten in der Zone von Interesse sind, wobei der Modellierungsschritt einen Schritt des Berechnens, in jedem Pixel der Zone von Interesse in einem der beiden Bilder, von Werten dx und dy von Derivaten der Pixelluminanz in zwei orthogonalen Richtungen beinhaltet, wobei die Luminanzdaten $X_{2d}$ der Zone von Interesse durch mehrere $\alpha$-periodische und/oder $\beta$-periodische Von Mises-Fischer Gesetze modelliert werden, deren Perioden sich voneinander unterscheiden, wobei jedes Gesetz eine Verteilung der normalen Einheitsvektoren auf die Ebenen der Gleichung z=dx.x+dy.y beschreibt, die allen Pixeln der Zone von Interesse entsprechen, wobei $P(X_{2d})$ durch das Produkt der unterschiedlichen Von Mises-Fischer Gesetze erhalten wird, die die Luminanzdaten $X_{2d}$ modellieren.

**2.** Verfahren nach Anspruch 1, wobei der Modellierungsschritt einen Schritt des Berechnens, in jedem der Pixel der Zone von Interesse in einem der beiden Bilder, von Werten mx und my der Bewegung des Pixels in zwei orthogonalen Richtungen relativ zu einem vorangehenden Bild beinhaltet, wobei die Bewegungsdaten $X_T$ der Zone von Interesse durch mehrere $\alpha$-periodische und/oder $\beta$-periodische Von Mises-Fischer Gesetze modelliert werden, deren Perioden sich voneinander unterscheiden, wobei jedes Gesetz eine Verteilung der normalen Einheitsvektoren auf die Ebenen der Gleichung z=mx.x+my.y beschreibt, die allen Pixeln der Zone von Interesse entsprechen, wobei $P(X_T)$ durch das Produkt der verschiedenen Von Mises-Fischer Gesetze erhalten wird, die die Bewegungsdaten $X_T$ modellieren.

**3.** Verfahren nach einem der Ansprüche 1 und 2, wobei der Modellierungsschritt einen Schritt des Berechnens, in jedem Pixel der Zone von Interesse in dem den beiden Bildern entsprechenden Disparitätsbild, von Werten px und py der Derivate der Pixeltiefe in zwei orthogonalen Richtungen beinhaltet, wobei die Tiefendaten $X_{3d}$ der Zone von Interesse durch mehrere $\alpha$-periodische und/oder $\beta$-periodische Von Mises-Fischer Gesetze modelliert werden, deren Perioden sich voneinander unterscheiden, wobei jedes Gesetz eine Verteilung der normalen Einheitsvektoren auf die Ebenen der Gleichung z=px.x+py.y beschreibt, die allen Pixeln der Zone von Interesse entsprechen, wobei $P(X_{3d})$ durch das Produkt der verschiedenen Von Mises-Fischer Gesetze erhalten wird, die die Tiefendaten $X_{3d}$ modellieren.

**4.** Verfahren nach Anspruch 1, wobei die Zone von Interesse durch Verwenden eines Klassifizierers des Boosting-Typs ausgewählt wird.

**Claims**

**1.** A method for detecting a target present in at least two images of the same scene, which were simultaneously captured by separate cameras, said method comprising:

- a preliminary step, under setup conditions, of learning targets, and
- a simultaneous step, under operating conditions, of classifying objects present on the images, said target being deemed to be detected as soon as an object is classified as being one of the targets learnt during the learning step;

said method being **characterised in that** said step of learning targets includes a step of modelling data X corresponding to a zone of interest in the images by a parametric distribution law P such that $P(X) = P(X_{2d}, X_{3d}, X_T) = P(X_{2d})P(X_{3d})P(X_T)$, where $X_{2d}$ is the luminance data in the zone of interest, $X_{3d}$ is the depth data in the zone of interest and $X_T$ is the movement data in the zone of interest, said modelling step comprising a step of computing, in each pixel of the zone of interest in one of the two images, values dx and dy of derivatives of the pixel luminance

**12**

along two orthogonal directions, with the luminance data $X_{2d}$ of the zone of interest being modelled by a plurality of $\alpha$-periodic and/or $\beta$-periodic Von Mises-Fischer laws, the periods of which differ from each other, each law describing a distribution of the normal unit vectors on the planes of equation z=dx.x+dy.y corresponding to all of the pixels of the zone of interest, with $P(X_{2d})$ being obtained by the product of the different Von Mises-Fischer laws modelling the luminance data $X_{2d}$.

2.  The method according to claim 1, wherein said modelling step comprises a step of computing, in each pixel of the zone of interest in one of the two images, values mx and my of the movement of the pixel along two orthogonal directions relative to a preceding image, with the movement data $X_T$ of the zone of interest being modelled by a plurality of $\alpha$-periodic and/or $\beta$-periodic Von Mises-Fischer laws, the periods of which differ from each other, each law describing a distribution of the normal unit vectors on the planes of equation z=mx.x+my.y corresponding to all of the pixels of the zone of interest, with $P(X_T)$ being obtained by the product of the different Von Mises-Fischer laws modelling the movement data $X_T$.

3.  The method according to claims 1 and 2, wherein said modelling step comprises a step of computing, in each pixel of the zone of interest in the disparity image corresponding to the two images, values px and py of the derivatives of the pixel depth along two orthogonal directions, with the depth data $X_{3d}$ of the zone of interest being modelled by a plurality of $\alpha$-periodic and/or $\beta$-periodic Von Mises-Fischer laws, the periods of which differ from each other, each law describing a distribution of the normal unit vectors on the planes of equation z=px.x+py.y corresponding to all of the pixels of the zone of interest, with $P(X_{3d})$ being obtained by the product of the different Von Mises-Fischer laws modelling the depth data $X_{3d}$.

4.  The method according to claim 1, wherein the zone of interest is selected by using a classifier of the boosting type.

FIG.1a

FIG.1b

Image gauche et droites rectifiées    1

⬇

Calcul des dérivées
Calcul de la carte de profondeur
Calcul de la carte de mouvement    2

⬇

Calcul des vecteurs descripteurs
$X2d$, $X3d$, $XT$    3

⬇

Calcul des images intégrales
$II(X2d)$, $II(X3d)$, $II(XT)$    4

# FIG.2

EP 2 593 907 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. ESS ; K. SCHINDLER ; B. LEIBE ; L. VAN GOOL.** Improved Multi-Person Tracking with Active Occlusion Handling. *ICRA Workshop on People Detection and Tracking,* Mai 2009

- **STEFAN WALK ; NIKODEM MAJER ; KONRAD SCHINDLER ; BERNT SCHIELE.** New features and insights for pedestrian detection. *CVPR2010, IEEE CONFERENCE ON COMPUTER VISION AND PATTERN RECOGNITION,* 13 Juin 2010, ISBN 978-1-4244-6984-0, 1030-1037